(19) Europäisches Patentamt
European Patent Office
Office européen des brevets

(11) Numéro de publication : **0 342 112 B1**

## (12) FASCICULE DE BREVET EUROPEEN

(45) Date de publication du fascicule du brevet :
**15.01.92 Bulletin 92/03**

(51) Int. Cl.$^5$ : **G01K 7/22, G01K 1/16**

(21) Numéro de dépôt : **89401276.4**

(22) Date de dépôt : **05.05.89**

(54) **Dispositif perfectionne de mesure de température avec contact d'alerte.**

(30) Priorité : **09.05.88 FR 8806214**

(43) Date de publication de la demande :
**15.11.89 Bulletin 89/46**

(45) Mention de la délivrance du brevet :
**15.01.92 Bulletin 92/03**

(84) Etats contractants désignés :
**DE ES GB IT**

(56) Documents cités :
**EP-A- 0 203 858**
**DE-A- 3 119 681**
**FR-A- 1 349 369**
**US-A- 3 295 373**

(73) Titulaire : **JAEGER**
**2, rue Baudin**
**F-92303 Levallois-Perret (FR)**

(72) Inventeur : **Dupuy, Christian**
**24, rue Jean Moulin**
**F-92000 Nanterre (FR)**

(74) Mandataire : **Martin, Jean-Jacques et al**
**Cabinet REGIMBEAU 26, Avenue Kléber**
**F-75116 Paris (FR)**

## Description

La présente invention concerne un dispositif de mesure de température avec contact d'alerte, en particulier pour véhicule automobile.

La présente invention a pour but de perfectionner les dispositifs décrits dans la demande de brevet FR-A-2582398, au nom de la Demanderesse, comprenant un boîtier allongé en matériau thermiquement et électriquement conducteur qui loge un élément bilame formant contact d'alerte fixé sur le fond du boîtier, un élément thermorésistant pour la mesure de température placé latéralement par rapport à l'élément bilame et un support en matériau électriquement isolant comportant une lame de contact apte à coopérer avec un contact électrique porté par le boîtier.

Plus précisément, la présente invention a pour but, d'une part, de faciliter l'assemblage de ces dispositifs, d'autre part, d'éviter toute interaction thermique néfaste entre l'élément thermorésistant et l'élément bilame. La Demanderesse a en effet constaté que dans certaines configurations le courant traversant l'élément bilame, par effet joule, pouvait échauffer l'élément thermorésistant et ainsi fausser la mesure de température à réaliser, ou encore que le courant de détection traversant l'élément thermorésistant, toujours par effet joule, pouvait décaler le point de commutation de l'élément bilame.

Les buts précités sont atteints dans le cadre de la présente invention grâce à un dispositif de mesure du type précédemment indiqué caractérisé par le fait que ledit, support comprend :

— un plot de contact en matériau thermiquement et électriquement conducteur qui émerge à l'extérieur du support pour venir en contact électrique avec le boîtier et assurer un échange thermique avec celui-ci,

— ladite lame de contact,

— ledit élément thermorésistant intercalé entre le plot de contact et la lame de contact, et

— un élément ressort qui agit pour garantir un bon contact électrique et thermique entre le plot de contact et l'élément thermorésistant et un bon contact électrique entre la lame de contact et l'élément thermorésistant et par le fait que lesdits plot de contact, lame de contact, élément thermorésistant et élément ressort forment un module unitaire.

Dans le cadre de la présente demande de brevet on entend par "module unitaire" un module réunissant différentes pièces initialement séparées, assemblées dans une position relative prédéterminée et sans risque de séparation fortuite lors d'une manipulation.

D'autres caractéristiques, buts et avantages de la présente invention apparaîtront à la lecture de la description détaillée qui va suivre, et en regard des dessins annexés donnés à titre d'exemple et sur lesquels :

— la figure 1 représente une vue schématique en coupe axiale longitudinale d'un dispositif conforme à la présente invention,

— la figure 2 représente une vue schématique en coupe axiale longitudinale d'un module unitaire conforme à la présente invention,

— la figure 3 représente une vue similaire en coupe axiale longitudinale du support appartenant au module précité, avant assemblage,

— la figure 4 représente une vue latérale du même support selon une vue illustrée par la flèche référencée IV sur la figure 3,

— la figure 5 représente une vue en bout du même support selon une vue illustrée par la flèche référencée V sur la figure 3,

— la figure 6 représente une vue en coupe transversale du même support selon un plan de coupe référencé VI-VI sur la figure 3,

— les figures 7 et 8 représentent deux vues latérales orthogonales de la lame de contact intégrée au module conforme à la présente invention,

— les figures 9 et 10 représentent respectivement une vue en plan et une vue en coupe selon le plan de coupe référencé X-X sur la figure 9 d'un élément ressort intégré au module conforme à la présente invention, et

— les figures 11 et 12 représentent deux vues orthogonales du plot de contact intégré au module conforme à la présente invention

Le dispositif de mesure de température avec contact d'alerte, conforme à la présente invention, comprend un boîtier 10 réalisé en un matériau électriquement et thermiquement conducteur. Le boîtier 10 comprend une chambre interne borgne généralement cylindrique 11. L'axe de la chambre 11 est référencé O-O. La chambre 11 loge un élément bilame 20 et un élément thermorésistant 150.

La chambre 11 est obturée par un chapeau 30 réalisé en un matériau électriquement isolant qui sert par ailleurs de support à des lames de contact 31, 32. Celles-ci s'étendent pour l'essentiel parallèlement à l'axe O-O du boîtier. Elles traversent le chapeau 30. Les lames de contact 31, 32 sont donc accessibles à l'extérieur du chapeau. Par ailleurs, elles émergent largement dans la chambre 11 du boîtier.

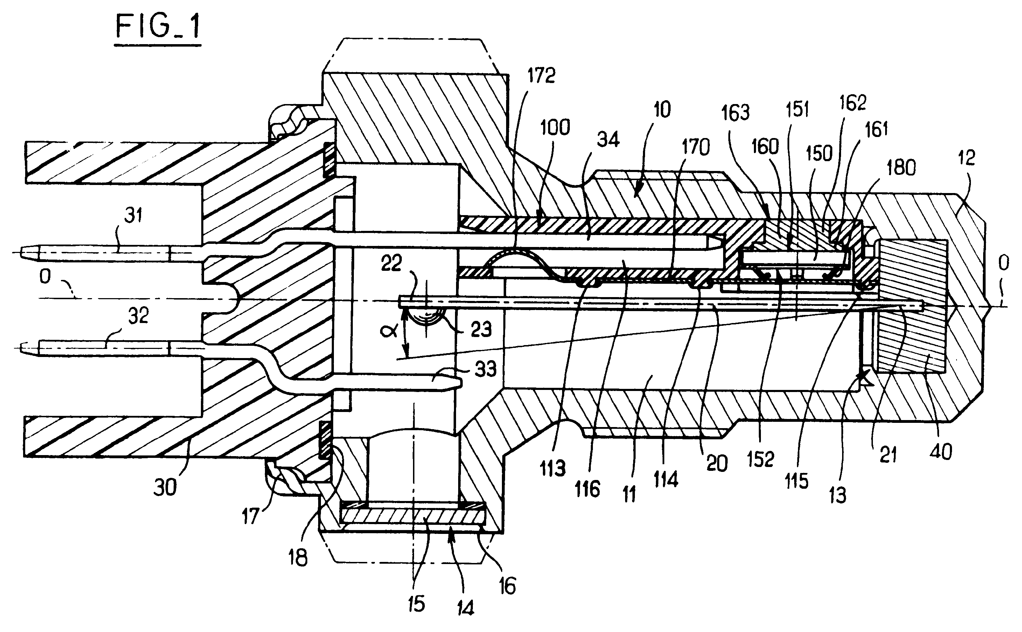

Comme illustré sur la figure 1 l'élément bilame 20 s'étend suivant la longueur de la chambre 11, c'est-à-dire sensiblement selon l'axe O-O.

Une première extrémité 21 de l'élément bilame 20 est fixée, de préférence par sertissage, sur un support 40 électriquement conducteur. Ce support 40 est lui-même immobilisé contre le fond 12 du boîtier, par exemple par sertissage comme illustré en 13 sur la figure 1.

L'extrémité libre 22 de l'élément bilame 20 porte un grain de contact 23 en regard de l'extrémité 33 de la lame de contact 32 placée dans la chambre 11. La position relative de l'élément bilame 20 et de la lame de contact 32 est déterminée de telle sorte que l'état de liaison électrique entre l'élément bilame 20 et la lame de contact 32 soit modifié lorsque la température du milieu environnant le boîtier 10 et détectée par l'élément bilame 20 par l'intermédiaire du support 40 atteint un seuil d'alerte.

On notera que la détection de la température d'alerte peut correspondre soit à la fermeture de la liaison électrique entre l'élément bilame 20 et la lame de contact 32 (cette liaison électrique étant ouverte lorsque la température est inférieure à la température d'alerte) soit à l'ouverture de la liaison électrique entre l'élément bilame 20 et la lame de contact 32 (cette liaison électrique étant fermée lorsque la température est inférieure à la température d'alerte).

Sur la figure 1, on a illustré schématiquement sous la référence le débattement angulaire de l'élément bilame suite à une élévation de température.

Pour faciliter le réglage, par pliage, de la position de l'extrémité 33 de la lame de contact 32 par rapport au grain 23, le boîtier 10 est muni en regard de l'extrémité 33 précitée d'une fenêtre 14. Cette fenêtre 14 permet d'accéder de l'extérieur et après assemblage du chapeau 30 sur le boîtier 10, à l'extrémité 33 de la lame de contact 32 pour plier celle-ci de façon appropriée. La fenêtre 14 est obturée après un tel réglage par une pastille 15 immobilisée sur le boîtier 10 par sertissage comme illustré en 16.

On remarquera à l'examen de la figure 1 que le chapeau 30 est immobilisé sur le boîtier 10 par sertissage en 17 après interposition d'un joint annulaire 18.

Comme indiqué précédemment, selon la caractéristique essentielle de l'invention, l'élément thermorésistant 150 est porté, en association avec un plot de contact 160, une lame de contact 170 et un élément ressort 180, sous forme d'un module unitaire, par un support 100. Celui-ci est formé d'une pièce allongée en matière plastique électriquement isolant par exemple du polyamide, réalisée par moulage.

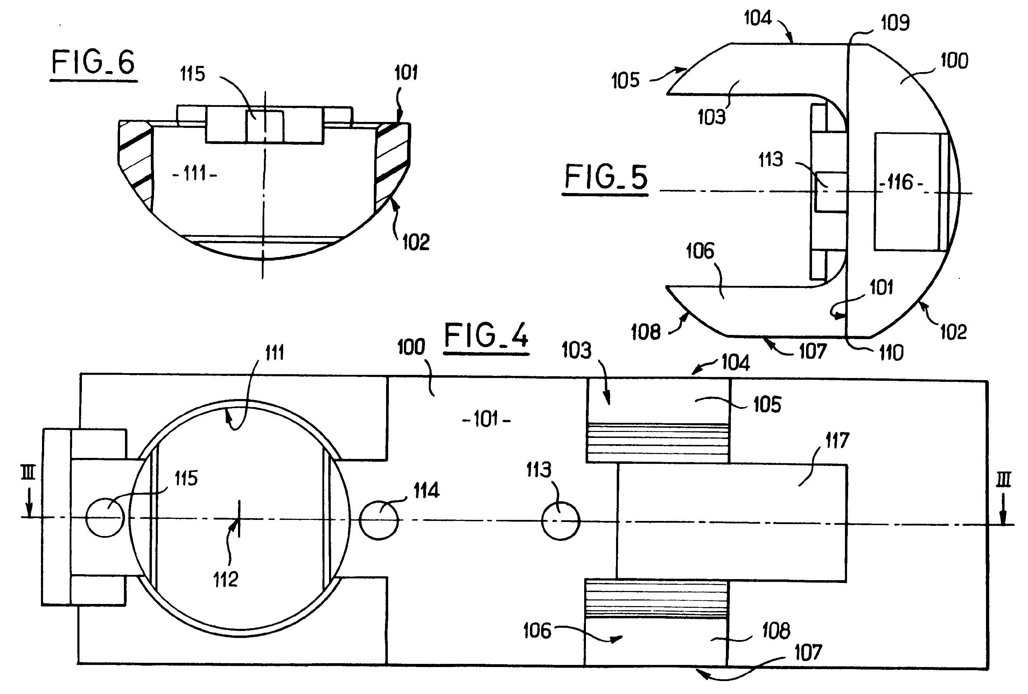

Pour l'essentiel, la pièce 100 possède une enveloppe hémicylindrique délimitée par une paroi de base plane 101 et une paroi hémicylindrique 102, ainsi que deux pattes élastiques 103, 106. Celles-ci sont prévues en saillie sur la surface de base 101, sensiblement parallèlement entre elles et perpendiculairement à ladite surface de base 101. Les pattes 103, 106, affleurent les bords libres longitudinaux 109, 110, correspondant à l'intersection de la surface de base 101 et de la surface hémicylindrique 102. De préférence, comme illustré sur la figure 5 annexée, les surfaces externes 104, 107, des pattes 103, 106, sont formées de méplats plans parallèles entre eux et perpendiculaires à la surface de base 101. Cependant l'extrémité libre des pattes 103, 106, est délimitée par des secteurs de cylindre 105, 108, ayant généralement le même rayon que la surface hémicylindrique 102. On notera par ailleurs que le rayon de courbure de cette surface hémicylindrique 102 correspond au rayon de courbure de la chambre interne 11 du boîtier 10.

Les pattes 103, 106 ont pour but de maintenir élastiquement le support 100 dans la chambre interne 11 lorsque le support est engagé dans celle-ci.

L'élément thermorésistant 150 est formé de préférence d'une pastille cylindrique de révolution possédant deux surfaces de base planes et circulaires 151, 152, formant les bornes respectives de l'élément thermorésistant 150.

Cet élément est logé dans une chambre cylindrique complémentaire 111 ménagée dans le support 100. La chambre 111 débouche sur la surface de base plane 101. Son axe 112 est perpendiculaire à la surface de base plane 101 et sécant de l'axe O-O après assemblage.

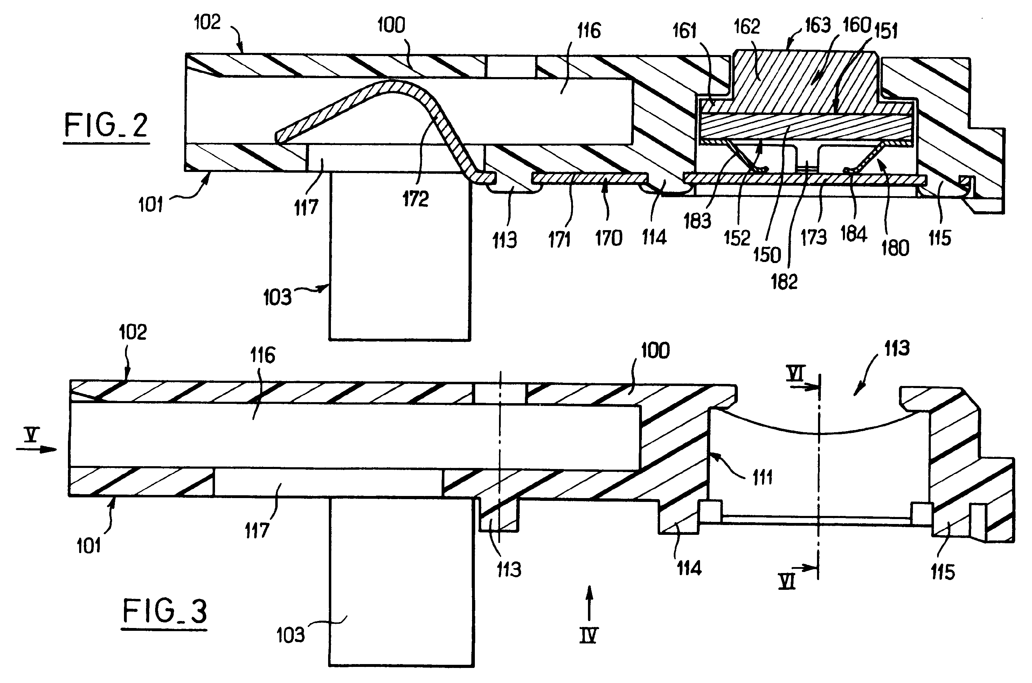

La chambre 111 débouche par ailleurs sur la surface hémicylindrique 102 par l'intermédiaire d'une ouverture 113 de plus faible section. Cette ouverture 113 est destinée à recevoir le plot de contact 160 de sorte que celui-ci émerge à l'extérieur du support 100, comme illustré par exemple sur la figure 2, pour venir en contact électrique avec le boîtier 10 et assurer un échange thermique avec celui-ci.

Pour maintenir le plot de contact 160 sur le support 100, c'est-à-dire pour éviter que le plot de contact 160 ne tombe lors d'une manipulation au cours de l'assemblage du dispositif, de préférence, le plot de contact 160 est formé d'une embase cylindrique 161 complémentaire de la chambre 111 et d'un noyau en saillie 162 dont la section est complémentaire de l'ouverture 113. La hauteur du noyau 162 par rapport à l'embase 161 est déterminée de telle sorte que lorsque l'embase 161 repose contre le fond de la chambre 111, la surface supérieure 163 émerge sur la surface hémicylindrique 102. On notera que pour assurer un bon contact, tant électrique que thermique, entre le plot de contact 160 et le boîtier 10, de préférence, la surface supérieure 163 du noyau 162 est d'allure cylindrique et de même rayon que la chambre interne 11 du boîtier 10.

La lame de contact 170 est réalisée en un matériau électriquement conducteur, par exemple un alliage à base de cuivre. Elle est fixée sur le support 100 en regard de sa surface de base plane 101. La lame de contact 170 comprend pour l'essentiel un corps allongé rectiligne 171 muni d'une incurvation 172 à une extrémité.

On notera que la seconde extrémité 173 de la lame de contact 170 s'étend en travers de la chambre 111. De préférence, la lame de contact 170 est fixée sur le support 100 par soudure aux ultrasons.

Pour cela, la lame de contact 170 est munie d'une pluralité d'ouvertures 174, 175, 176 réparties sur sa longueur et recevant des tétons 113, 114, 115, en saillie sur la surface de base plane 101 du support et destinés à être déformés, de façon classique en soi, par application d'ultrasons, comme illustré sur la figure 2, afin de maintenir la lame de contact 170.

L'extrémité incurvée 172 de la lame de contact 170 est destinée à être placée dans un canal borgne 116 ménagé dans le support 100. Le canal 116 s'étend parallèlement à l'axe O-O du boîtier, c'est-à-dire parallèlement à l'axe de révolution de la surface hémicylindrique 102. Il débouche sur l'extrémité du support 100 dirigée vers le chapeau 30. L'extrémité incurvée 172 de la lame de contact 170 est introduite dans le canal 116 par l'intermédiaire d'un évidement 117 reliant le canal 116 à la surface de base plane 101 du support.

Ainsi, la lame de contact 170 peut venir en contact électrique avec la lame de contact 31, par l'intermédiaire de son extrémité incurvée 172 lorsque le chapeau 30 est placé sur le boîtier 10 et qu'ainsi l'extrémité interne 34 de la lame de contact 31 est engagée dans le canal 116.

Selon le mode de réalisation illustré sur les figures annexées, l'élément ressort 180 est formé d'une pièce séparée intercalée entre la lame de contact 170 et la surface plane de base 152 de l'élément thermorésistant 150. L'élément ressort 180 est réalisé en un matériau électriquement conducteur, par exemple un alliage à base de cuivre.

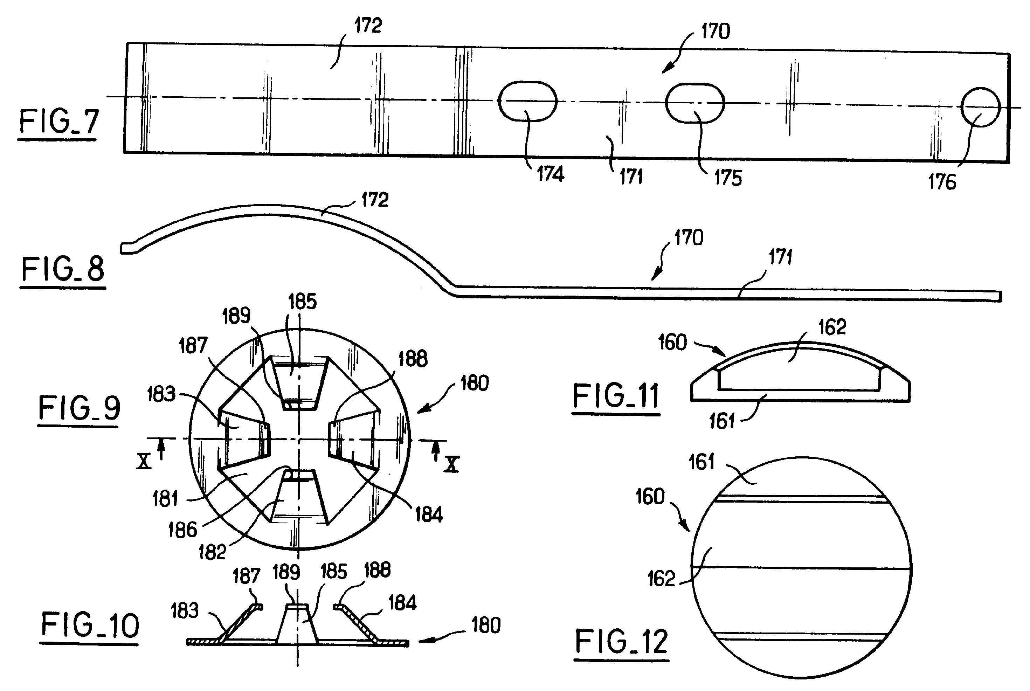

Plus précisément encore, comme illustré sur les figures 9 et 10 annexées, l'élément ressort 180 est formé d'une rondelle possédant une découpe centrale 181 qui définit une pluralité de languettes 182, 183, 184, 185, généralement radiales, raccordées au corps de la rondelle 180 au niveau de leur extrémité radialement externe et libres au niveau de leur extrémité radialement interne. Après réalisation de la découpe centrale 181, les languettes 182, 183, 184, 185 sont pliées au niveau de leur zone de raccordement au corps de la rondelle 180 pour prendre une position inclinée par rapport au plan moyen de la rondelle. La position ainsi obtenue pour les languettes 182, 183, 184 et 185 est illustrée par exemple sur la figure 10.

On notera qu'après le pliage précité pour écarter les languettes 182 à 185 du plan moyen de la rondelle 180, le corps de ces languettes reste plan. La Demanderesse a déterminé que de telles languettes planes 182 à 185 étaient plus souples que les languettes d'allure sphérique illustrées sur les figures 7 à 9 de la demande de brevet FR-A-2582398 précitée.

Par ailleurs, de préférence, comme illustré sur la figure 10 annexée, les extrémités libres radialement internes des languettes 182 à 185 font l'objet d'un second pliage pour former des sections 186 à 189 coplanaires et parallèles au corps de la rondelle 180. Ces sections 186 à 189 coplanaires permettent d'élever la surface de contact entre l'élément ressort 180 et la lame de contact 170 afin d'améliorer la fiabilité du contact électrique entre ces deux éléments.

Pour assembler le dispositif précédememnt décrit, illustré sur les figures annexées, on procède comme suit.

Dans un premier temps, le support 40 équipé de l'élément bilame 20 est introduit dans le boîtier 10 et immobilisé contre le fond 12 du boîtier par le sertissage 13.

En parallèle, on introduit successivement dans la chambre 111 d'un support 100, un plot 160, un élément thermorésistant 150 et un élément ressort 180. Puis une lame de contact 170 est placée contre la face de base plane 101 du support 100 en veillant à introduire l'extrémité incurvée 172 dans le canal 116 par l'intermédiaire de l'évidement 117. La lame de contact 170 est fixée sur le support 100 grâce aux plots 113, 114, 115, par application d'ultrasons. Dans cette position, le plot de contact 160 repose par son embase 161 contre le fond de la chambre 111. L'élément thermorésistant 150 repose par sa face de base 151 contre l'embase 161 précitée. La seconde face de base 152 de l'élément thermorésistant 150 repose contre le corps de l'élément ressort 180. L'extrémité libre radialement interne des languettes 182 à 185 repose contre la lame de contact 170. Grâce à l'élément ressort un bon contact électrique et thermique est assuré entre le plot de contact 160 et l'élément thermorésistant, d'une part, et un bon contact électrique est assuré entre l'élément thermorésistant et la lame de contact 170, par l'intermédiaire du ressort 180, d'autre part.

Le support 100 ainsi équipé constitue un module unitaire facile à manipuler qui peut être introduit dans la chambre 11 du boîtier, latéralement à côté de l'élément bilame 20.

Lors de l'engagement du support 100 dans la chambre 11, les pattes 103, 106 fléchissent élastiquement et assurent un centrage et un maintien élastique du support 100 dans le boîtier 10. Le plot de contact 160 qui émerge à l'extérieur du support 100 vient reposer contre la surface interne du boîtier 10. Le plot de contact 160 assure donc un échange thermique entre le boîtier 10 et l'élément 150 de sorte que celui-ci est à la même température que le milieu environnant le boîtier 10.

Le chapeau 30 équipé des lames de contact 31, 32 peut alors être placé sur le boîtier 10 par translation relative parallèlement à l'axe O-O. Lors de cette mise en place l'extrémité interne 34 de la lame de contact 31 est engagée dans le canal 116 et vient en contact électrique avec la lame de contact 170, plus précisément l'extrémité incurvée 172 de celle-ci. Le chapeau 30 est alors immobilisé sur le corps 10 grâce au sertissage 17. La valeur de l'impédance de l'élément thermorésistant 150 représentative de la température du milieu environnant le boîtier 10 est obtenue par mesure de la résistance entre la lame de contact 31 et le boîtier 10. En effet, le boîtier 10 est relié à la première face de base 151 de l'élément 150 par l'intermédiaire du plot de contact 160. Par ailleurs, la lame de contact 31 est reliée à la seconde face 152 de l'élément 150 par l'intermédiaire de la lame 170 et de l'élément ressort 180.

On notera que l'intégration du plot de contact 160 de l'élément thermorésistant 150, de l'élément ressort 180 et de la lame 170 sous forme d'un module unitaire dans le support 100 facilite largement les opérations d'assemblage du dispositif.

Par ailleurs, la disposition de l'élément thermorésistant 150 dans le support 100 en matériau plastique permet d'isoler thermiquement l'élément thermorésistant 150 et l'élément bilame 20. Toute interaction thermique entre ces deux éléments est donc évitée.

On notera que de préférence lorsque le chapeau 30 est immobilisé sur le boîtier 10, l'extrémité interne 34 de la lame de contact 31 vient reposer contre le fond du canal 116 comme illustré sur la figure 1 afin d'immobiliser axialement le support 100 dans le boîtier 10.

On rappelle que comme indiqué précédemment, les pattes 103, 106, solidaires du support 100 évitent toute vibration de celui-ci transversalement à l'axe O-O.

En variante, l'élément ressort 180 peut par exemple être intégré à la lame de contact 170, ou encore au plot de contact 160.

Par ailleurs, on peut envisager de rendre le support 100 solidaire du chapeau 30.

Par "élément thermorésistant" on entend, dans le cadre de la présente demande de brevet, tout élément dont la résistance électrique varie en fonction de la température.

## Revendications

1. Dispositif de mesure de température avec contact d'alerte, en particulier pour véhicules automobiles comprenant un boîtier allongé (10) en matériau thermiquement et électriquement conducteur qui loge un élément bilame (20) formant contact d'alerte fixé sur le fond du boîtier (10), un élément thermorésistant (150) pour la mesure de température placé latéralement par rapport à l'élément bilame (20), et un support (100) en matériau électriquement isolant comportant une lame de contact (170) apte à coopérer avec un contact électrique (31) isolé porté par le boîtier (10), caractérisé en ce que ledit support (100) comprend :
   — un plot de contact (160) en matériau thermiquement et électriquement conducteur qui émerge à l'extérieur du support (100) pour venir en contact électrique avec le boîtier (10) et assurer un échange thermique avec celui-ci,
   — ladite lame de contact (170)
   — ledit élément thermorésistant (150) intercalé entre le plot de contact (160) et la lame de contact (170), et
   — un élément ressort (180) qui agit pour garantir un bon contact électrique et thermique entre le plot de contact (160) et l'élément thermorésistant (150) et un contact électrique entre la lame de contact (170) et l'élément thermorésistant (150) et en ce que lesdits plots de contact (160), lame de contact (170), élément thermorésistant (150) et élément ressort (180) forment un module unitaire.

2. Dispositif de mesure selon la revendication 1, caractérisé par le fait que l'élément ressort (180) et intégré à la lame de contact (170).

3. Dispositif de mesure selon la revendication 1, caractérisé par le fait que l'élément ressort (180) est formé d'une pièce séparée.

4. Dispositif de mesure selon la revendication 1, caractérisé par le fait que l'élément ressort (180) est intégré au plot de contact (160).

5. Dispositif de mesure selon l'une des revendications 1 à 4, caractérisé par le fait que l'élément ressort (180) comprend une rondelle (180) possédant une découpe centrale (181) définissant une pluralité de languettes planes (182, 183, 184, 185) inclinées par pliage par rapport au plan de la rondelle (180).

6. Dispositif de mesure selon l'une des revendications 1 à 5, caractérisé par le fait que la lame de contact (170) est fixée sur une face externe (101) du support (100) par soudure aux ultrasons.

7. Dispositif de mesure selon l'une des revendications 1 à 6, caractérisé par le fait que la lame de contact (170) est fixée sur une face externe (101) du support (100) et possède une extrémité (172) engagée dans un canal (116) ménagé dans le support (100) pour venir en contact avec le contact électrique isolé (31) porté par le boîtier (10), lorsque ce contact (31) est engagé dans le canal (116).

8. Dispositif de mesure selon l'une des revendications 1 à 7, caractérisé par le fait que le support (100) possède une enveloppe générale hémicylindrique et deux pattes élastiques (105, 106) en saillie sur sa surface de base (101) généralement plane.

9. Dispositif de mesure selon l'une des revendications 1 à 8, caractérisé par le fait que le support (100) est solidaire d'un chapeau (30) en matériau électriquement isolant fixé sur le boîtier (10) et qui porte deux contacts électriques isolés (31, 32).

10. Dispositif de mesure selon l'une des revendications 1 à 9, caractérisé par le fait que le support (100) est réalisé par moulage en matière plastique.

## Patentansprüche

1. Vorrichtung zur Temperaturmessung mit Alarmkontakt, inbesondere für Kraftfahrzeuge, mit einem länglichen Gehäuse (10) aus thermisch und elektrisch leitendem Material zur Aufnahme eines den Alarmkontakt bildenden Bimetall-Elements (20) das am Boden des Gehäuses (10) befestigt ist, einem bezüglich des Bimetall-Elementes (20) seitlich angeordneten Temperaturwiderstand (150) für die Temperaturmessung und einem Träger (100) aus elektrisch isolierendem Werkstoff mit einer Kontaktzunge (170), die mit einem vom Gehäuse (10) getragenen, isolierten elektrischen Kontakt (31) zusammenwirken kann, **dadurch gekennzeichnet**, daß der Träger (100) aufweist :

eine Kontaktklemme (160) aus thermisch und elektrisch leitendem Werkstoff, die über das Äußere des Trägers (100) hinausragt, um mit dem Gehäuse (10) in elektrischen Kontakt zu kommen und den Temperaturaustausch mit diesem zu gewährleisten,

die Kontaktzunge (170),

den zwischen der Kontaktklemme (160) und der Kontaktzunge (170) eingesetzten Temperaturwiderstand (150),

ein Federelement (180), das den elektrischen und thermischen Kontakt zwischen der Kontaktklemme (160) und dem Temperaturwiderstand (150) und den elektrischen Kontakt zwischen der Kontaktzunge (170) und dem Temperaturwiderstand (150) sicherstellt, und

dadurch, daß die Kontaktklemme (160), die Kontaktzunge (170), der Temperaturwiderstand (150) und das Federelement (180) ein einheitliches Modul bilden.

2. Meßvorrichtung nach Anspruch 1, **dadurch gekennzeichnet**, daß das Federelement (180) in der Kontaktzunge (170) integriert ist.

3. Meßvorrichtung nach Anspruch 1, **dadurch gekennzeichnet**, daß das Federelement (180) ein getrenntes Bauteil ist.

4. Meßvorrichtung nach Anspruch 1, **dadurch gekennzeichnet**, daß das Federelement (180) in der Kontaktklemme (160) integriert ist.

5. Meßvorrichtung nach einem der Ansprüche 1 bis 4, **dadurch gekennzeichnet**, daß das Federelement (180) eine Lochscheibe (180) aufweist, mit einer mehrere ebene Zungen (182, 183, 184, 185) definierenden zentralen Ausnehmung (181), wobei die Zungen gegenüber der Lochscheibenebene durch Biegen geneigt sind.

6. Meßvorrichtung nach einem der Ansprüche 1 bis 5, **dadurch gekennzeichnet**, daß die Kontaktzunge (170) auf einer Außenseite (101) des Trägers (100) durch Ultraschall-Schweißen befestigt ist.

7. Meßvorrichtung nach einem der Ansprüche 1 bis 6, **dadurch gekennzeichnet**, daß die Kontaktzunge (170) auf einer Außenseite (101) des Trägers (100) befestigt ist und ein Ende (172) aufweist, das in einen aus dem Träger (100) ausgesparten Kanal (116) eingefügt ist, um mit dem vom Gehäuse (10) getragenen isolierten elektrischen Kontakt (31) zu kontaktieren, wenn dieser Kontakt (31) in den Kanal (116) eingeführt ist.

8. Meßvorrichtung nach einem der Ansprüche 1 bis 7, **dadurch gekennzeichnet**, daß der Träger (100) einen im wesentlichen halbzylindrischen Mantel und zwei elastische Laschen (105, 106) aufweist, die von seiner im wesentlichen ebenen Grundoberfläche (101) bestehen.

9. Meßvorrichtung nach einem der Ansprüche 1 bis 8, **dadurch gekennzeichnet**, daß der Träger (100) mit einer Kappe (30) aus elektrisch isolierendem Werkstoff, welche am Gehäuse (10) befestigt ist und zwei isolierte elektrische Kontakte (31, 32) trägt, fest verbunden ist.

10. Meßvorrichtung nach einem der Ansprüche 1 bis 9, **dadurch gekennzeichnet**, daß der Träger (100) durch Kunststoffformen hergestellt ist.

## Claims

1. A temperature measuring device including an alarm contact, in particular for motor vehicles, the device comprising an elongate housing (10) made of thermally and electrically conductive material receiving a bimetallic strip (20) constituting an alarm contact fixed to the end of the housing (10), a thermoresistive element (150) for measuring temperature and disposed laterally relative to the bimetallic strip (20), and a support (100) of electrically insulating material comprising a contact blade (170) suitable for co-operating with an insulated electrical contact (31) carried by the housing (10) ; characterized in that said support (100) comprises :

a contact stud (160) of thermally and electrically conductive material which emerges to the outside of the support (100) in order to make electrical contact with the housing (10) and to provide heat exchange therewith ;

said contact blade (170) ;

said thermoresistive element (150) interposed between the contact stud (160) and the contact blade (170) ; and

a spring element (180) acting to guarantee electrical and thermal contact between the contact stud (160) and the thermoresistive element (150) and electrical contact between the contact blade (170) and the thermoresistive element (150) ; and in that said contact stud (160), contact blade (170), thermoresistive element (150) and spring element (180) form a unitary module.

2. A measuring device according to claim 1, characterized by the fact that the spring element (180) is integrated with the contact blade (170).

3. A measuring device according to claim 1, characterized by the fact that the spring element (180) is in the form of a separate part.

4. A measuring device according to claim 1, characterized by the fact that the spring element (180) is integrated with the contact stud (160).

5. A measuring device according to claim 1 or 3, characterized by the fact that the spring element (180) comprises a washer (180) having a central cut-out (181) defining a plurality of plane tongues (182, 183, 184, 185) which are folded to slope relative to the plane of the washer (180).

6. A measuring device according to any one of claims 1 to 5, characterized by the fact that the contact blade (170) is fixed on an outer face (101) of the support (100) by ultrasonic welding.

7. A measuring device according to any one of claims 1 to 6, characterized by the fact that the contact blade (170) is fixed on an outer face (101) of the support (100) and has one end (172) engaged in a channel (116) provided in the support (100) in order to come into contact with the insulated electrical contact (31) carried by the housing (10) when said contact (31) is engaged in the channel (116).

8. A measuring device according to any one of claims 1 to 7, characterized by the fact that the support (100) possesses a generally semi-cylindrical envelope with two resilient tabs (105, 106) projecting from its generally plane base surface (101).

9. A measuring device according to any one of claims 1 to 8, characterized by the fact that the support (100) is fixed to a cap (30) of electrically insulating material which is fixed to the housing (10) and which carries two electrically insulated contacts (31, 32).

10. A measuring device according to any one of claims 1 to 9, characterized by the fact that the support (100) is made by molding a plastic material.

FIG_1

EP 0 342 112 B1

FIG_2

102 100 116 161 162 163 160 151

101 117 172 113 171 170 114 183 152 150 173 184 180 115

103 182

FIG_3

102 116 100 113

V 111

101 117 113 114 VI 115

103 IV

9

EP 0 342 112 B1

FIG.6

115    101

-111-

102

FIG.5

104    109
105    100
103
113
-116-
106
101
108    102
107    110

FIG.4

111    100    103
-101-    104
105
117
115    114    113
112
106    108
107

EP 0 342 112 B1

FIG_7

FIG_8

FIG_9

FIG_10

FIG_11

FIG_12